(19) Europäisches Patentamt
European Patent Office
Office européen des brevets

(11) Veröffentlichungsnummer: **0 475 089 B1**

(12) **EUROPÄISCHE PATENTSCHRIFT**

(45) Veröffentlichungstag der Patentschrift: **28.06.95**

(51) Int. Cl.[6]: **C09B 67/22**, D06P 1/18, //C09B29/085

(21) Anmeldenummer: **91113453.4**

(22) Anmeldetag: **10.08.91**

Die Akte enthält technische Angaben, die nach dem Eingang der Anmeldung eingereicht wurden und die nicht in dieser Patentschrift enthalten sind.

# (54) Mischungen von Monoazofarbstoffen.

(30) Priorität: **24.08.90 DE 4026747**

(43) Veröffentlichungstag der Anmeldung:
**18.03.92 Patentblatt 92/12**

(45) Bekanntmachung des Hinweises auf die Patenterteilung:
**28.06.95 Patentblatt 95/26**

(84) Benannte Vertragsstaaten:
**CH DE FR GB IT LI**

(56) Entgegenhaltungen:
**EP-A- 0 277 529**
**FR-A- 2 193 062**
**GB-A- 2 108 141**

**PATENTS ABSTRACTS OF JAPAN, Band 12, Nr. 467 (C-550)[3314], 7. Dezember 1988;& JP-A-63 189 465 (GOSEI SENRIYOU) 05-08-1988 (Kat. D)**

(73) Patentinhaber: **HOECHST MITSUBISHI KASEI CO., LTD.**
**10-33, Akasaka 4-chome**
**Minato-ku,**
**Tokyo (JP)**

(72) Erfinder: **Tsumura,Hirotsugu**
**Isonokami-cho,6-11-3 Kishiwda-Shi**
**Osaka (JP)**
Erfinder: **Bühler,Ulrich Dr.**
**Kastanienweg 8**
**W-8755 Alzenau (DE)**
Erfinder: **Kühn,Reinhard**
**Heinrich-Bleicher-Strasse 39**
**W-6000 Frankfurt 50 (DE)**
Erfinder: **Boos,Margareta**
**Am See 6**
**W-6234 Hattersheim (DE)**

(74) Vertreter: **Urbach, Hans-Georg, Dr. et al**
**CASSELLA AKTIENGESELLSCHAFT,**
**Patentabteilung,**
**Hanauer Landstrasse 526**
**D-60386 Frankfurt (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft Mischungen von Monoazofarbstoffen, die dadurch gekennzeichnet sind, daß sie aus einem oder mehreren Farbstoffen der allgemeinen Formel I

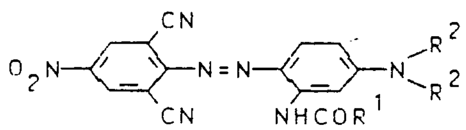
(I)

und einem oder mehreren Farbstoffen der allgemeinen Formel II

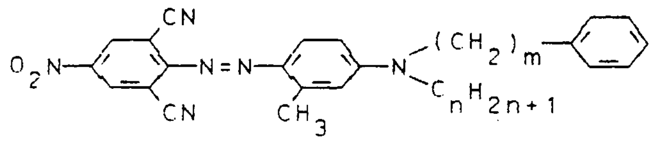
(II)

worin
$R^1$ Methyl, Ethyl, n-Propyl oder i-Propyl,
$R^2$ Ethyl oder n-Propyl
m 2 oder 3 und
n 1 oder 2 mit der Maßgabe, daß m + n gleich 4 ist,
bedeuten, bestehen.

Die Erfindung betrifft auch Verfahren zur Herstellung der erfindungsgemäßen Farbstoffmischungen sowie deren Verwendung zum Färben und Bedrucken von hydrophoben Fasermaterialien und deren Mischungen mit natürlichen Faserstoffen.

Den erfindungsgemäßen Mischungen ähnliche Mischungen sind bereits bekannt und z.B. in der GB-2108141 beschrieben.

Es wurde nun überraschenderweise gefunden, daß die erfindungsgemäßen Mischungen wesentlich verbesserte färberische Eigenschaften gegenüber den Einzelfarbstoffen und gegenüber den Mischungen der GB-2108141 besitzen.

Die erfindungsgemäßen Farbstoffmischungen bestehen aus einem oder mehreren Farbstoffen der allgemeinen Formel I und einem oder mehreren Farbstoffen der allgemeinen Formel II. Bevorzugt sind erfindungsgemäße Farbstoffmischungen, die aus einem oder zwei Farbstoffen der allgemeinen Formel I und einem Farbstoff der allgemeinen Formel II bestehen.

Bevorzugt sind Mischungen, die Farbstoffe der allgemeinen Formel I enthalten, in der $R^1$ für Methyl oder Ethyl oder insbesondere n-Propyl und $R^2$ für Ethyl steht. Bevorzugte Mischungen sind weiter solche, die nur zwei Farbstoffe der allgemeinen Formel I mit den Kombinationen Methyl/ethyl und n-Propyl/Ethyl oder Methyl/Ethyl und Methyl/n-Propyl für $R^1$ und $R^2$ und einen Farbstoff der allgemeinen Formel II enthalten.

In den erfindungsgemäßen Farbstoffmischungen kann das Verhältnis der verschiedenen Farbstoffe der allgemeinen Formeln I und II in relativ weiten Grenzen variieren. Im allgemeinen beträgt der Mindestgewichtsanteil einer Komponente 10 % und der maximale Gewichtsanteil 90 %. Bei Farbstoffmischungen, die nur aus je einem Farbstoff der allgemeinen Formeln I bzw. II bestehen, ist ein Mengenverhältnis von 70/30 bis 30/70 bevorzugt, d.h. der Gewichtsanteil eines Farbstoffs beträgt 30 bis 70 %.

Die Einzelfarbstoffe der allgemeinen Formeln I und II sind bekannt und z.B. in der DE-PS 17 94 402, der EP-36 512 und der japanischen Patentanmeldung JP-63189465 beschrieben.

Die erfindungsgemäßen Farbstoffmischungen können nach verschiedenen Verfahren hergestellt werden, z.B. durch Mischen der getrennt hergestellten und getrennt formierten Einzelfarbstoffe. Dieser Mischprozeß erfolgt in geeigneten Mischern wie z.B. Taumelmischern, in geeigneten Mühlen, beispielsweise Kugel- und Sandmühlen. Getrennt formierte Einzelfarbstoffe können aber auch durch Einrühren in Färbeflotten gemischt werden.

Vorzugsweise werden die erfindungsgemäßen Mischungen durch gemeinsame Formierung der getrennt hergestellten Einzelkomponenten erhalten.

Diese gemeinsame Formierung ist dadurch gekennzeichnet, daß eine Farbstoffmischung aus jeweils mindestens einem Farbstoff der allgemeinen Formeln I und II in Gegenwart von Dispergiermitteln in

geeigneten Mühlen, wie z.B. Kugel- oder Sandmühlen, gemahlen und, wenn eine pulverförmige Farbstoff-Formierung hergestellt werden soll, anschließend sprühgetrocknet wird.

Geeignete Dispergiermittel sind z.B. anionische oder nichtionische Dispergiermittel, die auch gemeinsam eingesetzt werden können. Anionische Dispergiermittel sind z.B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren; Alkyl- oder Alkyl-aryl-sulfonate, sowie Alkyl-aryl-polyglykolethersulfate. Nichtionische Dispergiermittel oder Emulgatoren sind z.B. Umsetzungsprodukte von Alkylenoxiden, wie z.B. Ethylen-oder Propylenoxid mit alkylierbaren Verbindungen, wie z.B. Fettalkoholen, Fettaminen, Fettsäuren, Phenolen, Alkylphenolen, Arylalkylphenolen, Arylalkylarylphenolen und Carbonsäureamiden, wie z.B. Anlagerungsprodukte von 5 bis 10 Ethylenoxid-Einheiten an $C_8$-$C_{10}$-Alkylphenole.

Die Mahlung erfolgt bei Temperaturen zwischen 10 und 90°C, vorzugsweise bei 30 bis 60°C. Bei der gemeinsamen Formierung getrennt hergestellter Einzelkomponenten ist die gemeinsame Mahlung bei Temperaturen über 30°C vorteilhaft. Die Farbstoffteilchen werden dabei mechanisch so weit zerkleinert, daß eine optimale spezifische Oberfläche erreicht wird und die Sedimentation des Farbstoffs möglichst gering ist. Die Teilchengröße der Farbstoffe liegen im allgemeinen zwischen 0,5 und 5 µm, vorzugsweise bei etwa 1 µm.

Es ist vorteilhaft, die getrennt hergestellten Einzelkomponenten der Farbstoffmischung vor der gemeinsamen Mahlung einer gemeinsamen thermischen Behandlung zu unterwerfen. Diese thermische Behandlung ist dadurch gekennzeichnet, daß man die Einzelkomponenten der Farbstoffmischung, gegebenenfalls unter Druck, in Wasser eine halbe bis mehrere Stunden auf Temperaturen von 50 bis 150°C, vorzugsweise 90 bis 130°C, erhitzt und wieder abkühlt. Dieses Erhitzen erfolgt vorteilhaft in Gegenwart eines oder mehrerer Dispergiermittel oder eines organischen Lösungsmittels. Solche Lösungsmittel sind zum Beispiel Methanol, Ethanol, Dimethylformamid oder Dimethylsulfoxid, vorzugsweise jedoch in Wasser wenig lösliche Lösungsmittel wie Toluol, Chlorbenzol, 1.2-Dichlorbenzol oder Butylacetat. Diese Lösungsmittel werden nach der thermischen Behandlung wieder abdestilliert.

Eine bevorzugte Vorbehandlung der Einzelkomponenten der Farbstoffmischung vor der gemeinsamen Mahlung ist das gemeinsame Lösen der Einzelkomponenten in einem organischen Lösungsmittel oder Lösungsmittelgemisch mit anschließendem Auskristallisieren oder Ausfällen, Isolieren, z.B. durch Filtration und Abtrennen von Lösungsmittelresten, z.B. durch Waschen.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche FarbstoffEinspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff, Dispergiermittel und andere Hilfsmittel, wie z.B. Netz-, Oxydations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Die Farbstoffgehalte der flüssigen Farbstoffeinstellungen liegen bei 20 bis 40%, die Dispergiermittelgehalte bei ca. 20 bis 40%. Bei Pulvereinstellungen liegen die Farbstoffgehalte bei 20 bis 60% und die Dispergiermittelgehalte bei 40 bis 80%. Aus ökonomischen Gründen wird ein Farbstoffgehalt von 20% meist nicht unterschritten.

Die erfindungsgemäßen Farbstoffmischungen sind als solche oder auch im Gemisch mit anderen Dispersionsfarbstoffen vorzüglich zum Färben und Bedrucken von hydrophoben synthetischen Fasermaterialien und deren Mischungen mit natürlichen Faserstoffen geeignet. Überraschenderweise sind sie den Einzelfarbstoffen im Hinblick auf färberisches Verhalten und coloristische Echtheiten, wie z.B. Thermomigration, Thermofixierechtheit, Wasser-, Wasch- und Reibechtheit, insbesondere im Aufbau- und Ausziehvermögen und im Egalisiervermögen, überlegen. Außerdem werden bei den erfindungsgemäßen Farbstoffmischungen auch bei einer Herabsetzung der Färbetemperaturen und Verkürzung der Färbezeit noch hervorragend farbstarke Färbungen bei ausgezeichneter Baderschöpfung erhalten.

Als hydrophobe synthetische Materialien kommen z.B. in Betracht: Cellulose-2$^1/_2$-Acetat, Cellulosetriacetat, Polyamide und besonders Polyester, wie z.B. Polyethylenglykolterephthalat. Deren Mischungen mit natürlichen Faserstoffen sind z.B. Baumwolle, regenerierte Cellulosefasern oder Wolle.

Die Erfindung wird durch die folgenden Beispiele näher erläutert:

Beispiel 1

14,7 g des Farbstoffs der Formel III

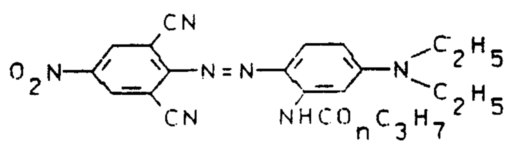

(III)

14,7 g des Farbstoffs der Formel IV

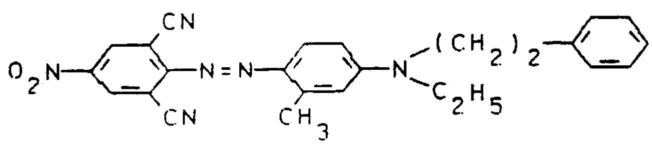

(IV)

werden gemeinsam mit 227,6 g Wasser, 86,8 g eines höher molekularen Ligninsulfonats und 6,3 g eines Arylpolyglykolethers mit einer Dissolverscheibe homogenisiert und der pH-Wert mit 2,6 ml 50%iger Essigsäure auf 8,0 gestellt. Anschließend wird dieser Anschlag in einer wassergekühlten Perlmühle bis zu einer Feinverteilung von < 5 $\mu$ gemahlen, der so erhaltene Mahlteig zur Abtrennung vom Mahlmittel gesieht und danach mit einem Sprühtrockner getrocknet.

1,25 g des so erhaltenen Farbstoffs werden in 2000 g Wasser dispergiert. Die Dispersion wird mit 4 g Ammoniumsulfat, 2 g eines handelsüblichen Dispergiermittels auf Basis eines Kondensationsproduktes aus Naphthalinsulfonsäurenatriumsalz und Formaldehyd und 2 g eines Kondensationsprodukts aus m-Kresol, Formaldehyd und Natriumsulfit versetzt und mit Essigsäure auf einen pH-Wert von 5,5 gestellt. In die so erhaltene Färbeflotte bringt man 100 g eines texturierten Polyestergewebes auf Basis Polyethylenglykolterephthalat ein und färbt 1/2 Stunde bei 125 °C. Nach anschließendem Spülen, reduktiver Nachbehandlung mit einer 0,2%igen Natriumdithionitlösung während 15 Minuten bei 70 bis 80 °C, Spülen und Trocknen, erhält man eine farbstarke blaue Färbung mit hervorragenden coloristischen Eigenschaften.

Bringt man zur Herstellung eines Nachzugs in das Färbebad nochmals 100 g eines texturierten Polyestergewebes auf Basis Polyethylenglykolterephthalät ein und färbt 1 Stunde bei 135 °C und behandelt den Nachzug wie vorstehend bei der eigentlichen Färbung angegeben nach, so erhält man eine nahezu farblose Färbung.

Beispiel 2

10 g des Farbstoffs der Formel V

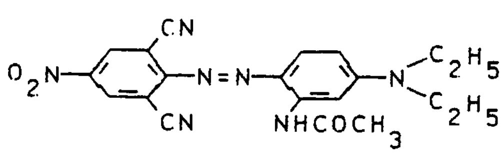

(V)

5 g des Farbstoffs der Formel VI

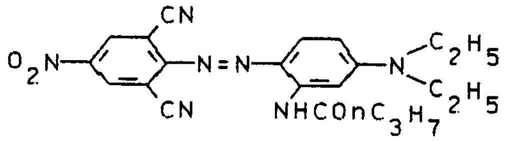

(VI)

und
14,4 g des Farbstoffs der Formel VII

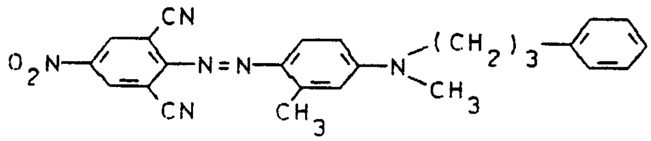

(VII)

werden wie in Beispiel 1 angegeben in eine Pulverpräparation überführt und gefärbt. Auch dabei erhält man eine farbstarke blaue Färbung mit hervorragenden coloristischen Echtheiten und eine nahezu völlige Baderschöpfung.

Beispiel 3

Ersetzt man in Beispiel 1 die 14,7 g des Farbstoffs der Formel III durch die entsprechende Menge des Farbstoffs der Formel V

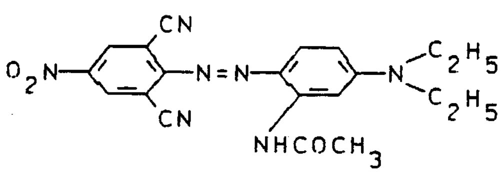

(V)

und verfährt weiter so, wie in Beispiel 1 beschrieben, erhält man auch hier eine farbstarke blaue Färbung mit hervorragenden coloristischen Eigenschaften und einem nur schwach angefärbten Nachzug.

In der nachstehenden Tabelle sind weitere erfindungsgemäße Farbstoffmischungen mit den Bedeutungen $R^1$ und $R^2$ sowie m und n und dem Gewichtsverhältnis der Einzelfarbstoffe angegeben, die nach den vorstehenden Angaben herstellbar sind und die auf Polyestermaterialien ebenfalls farbstarke blaue Färbungen bzw. Drucke mit ebenfalls sehr guten coloristischen Eigenschaften liefern.

Tabelle

| Beispiel | $R^1$ | $R^2$ | m | n | Mischungsverhältnis |
|---|---|---|---|---|---|
| 4 | $C_2H_5$ | $C_2H_5$ | - | - | 40 |
| | - | - | 2 | 2 | 60 |
| 5 | $CH_3$ | $nC_3H_7$ | - | - | 65 |
| | - | - | 2 | 2 | 35 |
| 6 | $C_2H_5$ | $nC_3H_7$ | - | - | 30 |
| | - | - | 2 | 2 | 70 |
| 7 | $nC_3H_7$ | $nC_3H_7$ | - | - | 50 |
| | - | - | 2 | 2 | 50 |
| 8 | $iC_3H_7$ | $C_2H_5$ | - | - | 33 1/3 |
| | - | - | 2 | 2 | 66 2/3 |
| 9 | $CH_3$ | $C_2H_5$ | - | - | 50 |
| | - | - | 3 | 1 | 50 |
| 10 | $CH_3$ | $nC_3H_7$ | - | - | 20 |
| | - | - | 3 | 1 | 80 |
| 11 | $C_2H_5$ | $C_2H_5$ | - | - | 45 |
| | - | - | 3 | 1 | 55 |
| 12 | $C_2H_5$ | $nC_3H_7$ | - | - | 90 |
| | - | - | 3 | 1 | 10 |

| Beispiel | $R^1$ | $R^2$ | m | n | Mischungsverhältnis |
|---|---|---|---|---|---|
| 13 | $nC_3H_7$ | $C_2H_5$ | - | - | 55 |
| | - | - | 3 | 1 | 45 |
| 14 | $iC_3H_7$ | $C_2H_5$ | - | - | 35 |
| | - | - | 3 | 1 | 65 |
| 15 | $iC_3H_7$ | $nC_3H_7$ | - | - | 25 |
| | - | - | 3 | 1 | 75 |
| 16 | $CH_3$ | $C_2H_5$ | - | - | 25 |
| | $nC_3H_7$ | $C_2H_5$ | - | - | 25 |
| | - | - | 2 | 2 | 50 |
| 17 | $CH_3$ | $C_2H_5$ | - | - | 35 |
| | $nC_3H_7$ | $C_2H_5$ | - | - | 15 |
| | - | - | 2 | 2 | 50 |
| 18 | $CH_3$ | $C_2H_5$ | - | - | 25 |
| | $CH_3$ | $nC_3H_7$ | - | - | 25 |
| | - | - | 2 | 2 | 50 |
| 19 | $CH_3$ | $nC_3H_7$ | - | - | 20 |
| | $nC_3H_7$ | $C_2H_5$ | - | - | 40 |
| | - | - | 2 | 2 | 40 |
| 20 | $CH_3$ | $C_2H_5$ | - | - | 35 |
| | $C_2H_5$ | $C_2H_5$ | - | - | 40 |
| | - | - | 2 | 2 | 25 |
| 21 | $C_2H_5$ | $C_2H_5$ | - | - | 10 |
| | $nC_3H_7$ | $C_2H_5$ | - | - | 60 |
| | - | - | 2 | 2 | 30 |
| 22 | $CH_3$ | $C_2H_5$ | - | - | 33 1/3 |
| | $iC_3H_7$ | $C_2H_5$ | - | - | 33 1/3 |
| | - | - | 2 | 2 | 33 1/3 |
| 23 | $iC_3H_7$ | $C_2H_5$ | - | - | 5 |
| | $iC_3H_7$ | $nC_3H_7$ | - | - | 55 |
| | - | - | 2 | 2 | 40 |
| 24 | $nC_3H_7$ | $C_2H_5$ | - | - | 50 |
| | $iC_3H_7$ | $C_2H_5$ | - | - | 10 |
| | - | - | 2 | 2 | 40 |

| Beispiel | $R^1$ | $R^2$ | m | n | Mischungs-verhältnis |
|---|---|---|---|---|---|
| 25 | $CH_3$ | $C_2H_5$ | - | - | 25 |
| | $CH_3$ | $nC_3H_7$ | - | - | 5 |
| | $nC_3H_7$ | $C_2H_5$ | - | - | 35 |
| | - | - | 2 | 2 | 35 |
| 26 | $CH_3$ | $C_2H_5$ | - | - | 40 |
| | - | - | 2 | 2 | 15 |
| | - | - | 3 | 1 | 45 |
| 27 | $nC_3H_7$ | $C_2H_5$ | - | - | 30 |
| | - | - | 2 | 2 | 60 |
| | - | - | 3 | 1 | 10 |
| 28 | $CH_3$ | $C_2H_5$ | - | - | 50 |
| | - | - | 3 | 1 | 50 |
| 29 | $CH_3$ | $nC_3H_7$ | - | - | 70 |
| | - | - | 3 | 1 | 30 |
| 30 | $C_2H_5$ | $C_2H_5$ | - | - | 30 |
| | - | - | 3 | 1 | 70 |
| 31 | $C_2H_5$ | $nC_3H_7$ | - | - | 40 |
| | - | - | 3 | 1 | 60 |
| 32 | $nC_3H_7$ | $C_2H_5$ | - | - | 80 |
| | - | - | 3 | 1 | 20 |
| 33 | $nC_3H_7$ | $C_2H_5$ | - | - | 50 |
| | - | - | 3 | 1 | 50 |
| 34 | $iC_3H_7$ | $C_2H_5$ | - | - | 45 |
| | - | - | 3 | 1 | 55 |
| 35 | $iC_3H_7$ | $nC_3H_7$ | - | - | 30 |
| | - | - | 3 | 1 | 70 |
| 36 | $CH_3$ | $C_2H_5$ | - | - | 25 |
| | $CH_3$ | $nC_3H_7$ | - | - | 25 |
| | - | - | 3 | 1 | 50 |
| 37 | $CH_3$ | $nC_3H_7$ | - | - | 50 |
| | $C_2H_5$ | $C_2H_5$ | - | - | 10 |
| | - | - | 3 | 1 | 40 |

| Beispiel | $R^1$ | $R^2$ | m | n | Mischungsverhältnis |
|---|---|---|---|---|---|
| 38 | $CH_3$ | $C_2H_5$ | - | - | 33 1/3 |
| | $nC_3H_7$ | $C_2H_5$ | - | - | 33 1/3 |
| | - | - | 3 | 1 | 33 1/3 |
| 39 | $CH_3$ | $C_2H_5$ | - | - | 40 |
| | $iC_3H_7$ | $C_2H_5$ | - | - | 45 |
| | - | - | 3 | 1 | 15 |
| 40 | $CH_3$ | $nC_3H_7$ | - | - | 10 |
| | $nC_3H_7$ | $C_2H_5$ | - | - | 30 |
| | - | - | 3 | 1 | 60 |
| 41 | $CH_3$ | $C_2H_5$ | - | - | 70 |
| | - | - | 3 | 1 | 30 |
| 42 | $CH_3$ | $C_2H_5$ | - | - | 30 |
| | - | - | 3 | 1 | 70 |

**Patentansprüche**

1. Mischungen von Monoazofarbstoffen, dadurch gekennzeichnet, daß sie aus einem oder mehreren Farbstoffen der allgemeinen Formel I

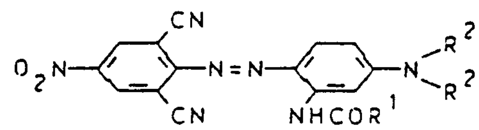

(I)

und einem oder mehreren Farbstoffen der allgemeinen Formel II

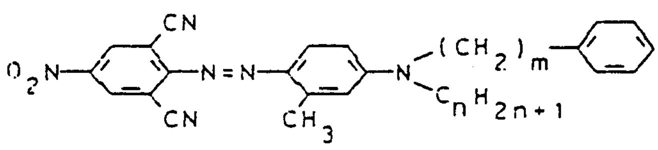

(II)

worin
$R^1$ Methyl, Ethyl, n-Propyl oder i-Propyl,
$R^2$ Ethyl oder n-Propyl
m 2 oder 3 und
n 1 oder 2 mit der Maßgabe, daß m + n gleich 4 ist,
bedeuten, bestehen.

2. Farbstoffmischung nach Anspruch 1, dadurch gekennzeichnet, daß sie aus je einem oder zwei Farbstoffen der allgemeinen Formel I bzw. II besteht.

3. Farbstoffmischung nach Anspruch 1 und/oder 2, dadurch gekennzeichnet, daß der Gewichtsanteil eines Farbstoffs der allgemeinen Formel I bzw. II 10 bis 90 Gew.% und, wenn die Mischung nur aus je einem

Farbstoff der allgemeinen Formel I bzw. II besteht, bevorzugt 30 bis 70 Gew.% beträgt.

4. Farbstoffmischung nach einem oder mehreren der Ansprüche 1 bis 3, dadurch gekennzeichnet, daß sie einen Farbstoff der allgemeinen Formel I enthält, in dem $R^1$ für n-Propyl steht.

5. Farbstoffmischung nach einem oder mehreren der Ansprüche 1 bis 4, dadurch gekennzeichnet, daß sie einen Farbstoff der allgemeinen Formel I enthält, in dem $R^2$ für Ethyl steht.

6. Farbstoffmischung nach einem oder mehreren der Ansprüche 1 bis 5, dadurch gekennzeichnet, daß sie zwei Farbstoffe der allgemeinen Formel I enthält, in der $R^1$ und $R^2$ in den Kombinationen Methyl/Ethyl und n-Propyl/Ethyl oder Methyl/Ethyl und Methyl/n-Propyl vorliegt.

7. Verfahren zur Herstellung der in einem oder mehreren der Ansprüche 1 bis 6 genannten Farbstoffmischungen, dadurch gekennzeichnet, daß die getrennt hergestellten und getrennt formierten Einzelfarbstoffe der allgemeinen Formel I bzw. II gemischt werden.

8. Verfahren zur Herstellung der in einem oder mehreren der Ansprüche 1 bis 6 genannten Farbstoffmischungen, dadurch gekennzeichnet, daß die getrennt hergestellten Einzelfarbstoffe der allgemeinen Formel I bzw. II gemeinsam formiert werden.

9. Verwendung einer Farbstoffmischung nach einem oder mehreren der Ansprüche 1 bis 6 zum Färben und Bedrucken von hydrophoben Fasermaterialien und deren Mischungen mit natürlichen Faserstoffen.

## Claims

1. Mixtures of monoazo dyes, characterized in that they consist of one or more dyes of the general formula I

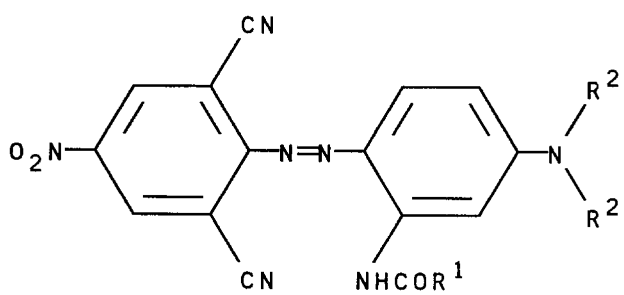

(I)

and of one or more dyes of the general formula II

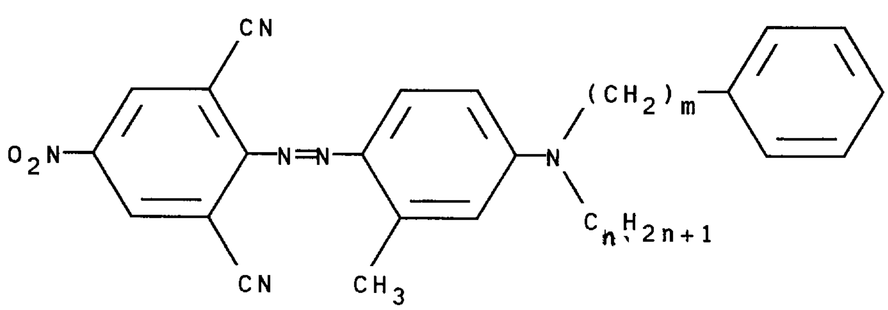

(II)

where

$R^1$ is methyl, ethyl, n-propyl or i-propyl,

$R^2$ is ethyl or n-propyl,

m is 2 or 3 and

n is 1 or 2, with the proviso that m + n is 4.

2. Dye mixture according to Claim 1, characterized in that it consists of one or two dyes each of the general formula I or II.

3. Dye mixture according to Claim 1 and/or 2, characterized in that the weight proportion of each dye of the general formula I or II is from 10 to 90 % by weight and, if the mixture consists only of one dye each of the general formula I or II, preferably 30 to 70% by weight.

4. Dye mixture according to one or more of Claims 1 to 3, characterized in that it contains a dye of the general formula I wherein $R^1$ is n-propyl.

5. Dye mixture according to one or more of Claims 1 to 4, characterized in that it contains a dye of the general formula I wherein $R^2$ is ethyl.

6. Dye mixture according to one or more of Claims 1 to 5, characterized in that it contains two dyes of the general formula I, where $R^1$ and $R^2$ are present in the combinations methyl/ethyl and n-propyl/ethyl or methyl/ethyl and methyl/n-propyl.

7. Process for preparing the dye mixtures mentioned in one or more of Claims 1 to 6, characterized in that the separately prepared and separately finished individual dyes of the general formula I or II are mixed.

8. Process for preparing the dye mixtures mentioned in one or more of Claims 1 to 6, characterized in that the separately prepared individual dyes of the general formula I or II are conjointly finished.

9. Use of a dye mixture according to one or more of Claims 1 to 6 for dyeing and printing hydrophobic fibre materials and blends thereof with natural fibre materials.

## Revendications

1. Mélanges de colorants monoazoïques, caractérisés en ce qu'ils sont constitués d'un ou plusieurs colorants de formule générale I

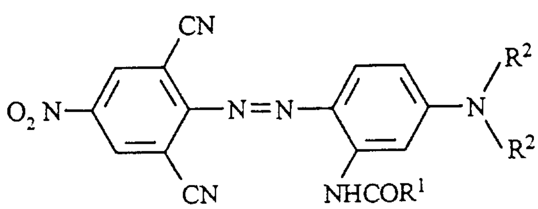

(I)

et d'un ou plusieurs colorants de formule générale II

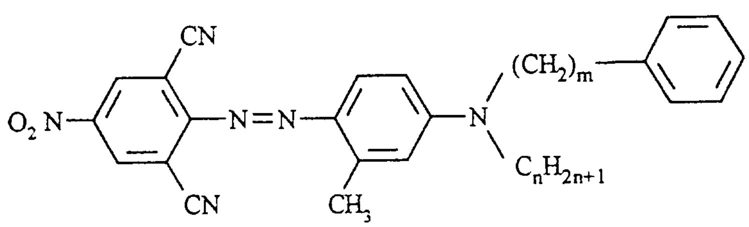

(II)

où

$R^1$ représente un reste méthyle, éthyle, n-propyle ou i-propyle,

$R^2$ est un reste éthyle ou n-propyle,

m est 2 ou 3 et
n est 1 ou 2, sous réserve que m + n soit égal à 4.

**2.** Mélange de colorants selon la revendication 1, caractérisé en ce qu'il est constitué d'un ou deux colorants de chacune des formules générales I et II.

**3.** Mélange de colorants selon la revendication 1 et/ou 2, caractérisé en ce que la fraction en masse d'un colorant de formule générale I ou II est de 10 à 90 %, et de préférence, lorsque le mélange ne contient qu'un colorant de chacune des formules générales I et II, de 30 à 70 % en masse.

**4.** Mélange de colorants selon l'une ou plusieurs des revendications 1 à 3, caractérisé en ce qu'il contient un colorant de formule générale I dans laquelle $R^1$ représente un n-propyle.

**5.** Mélange de colorants selon l'une ou plusieurs des revendications 1 à 4, caractérisé en ce qu'il contient un colorant de formule générale I dans laquelle $R^2$ représente un éthyle.

**6.** Mélange de colorants selon l'une ou plusieurs des revendications 1 à 5, caractérisé en ce qu'il contient deux colorants de formule générale I, dans lesquels $R^1$ et $R^2$ forment les combinaisons méthyle/éthyle et n-propyle/éthyle ou méthyle/éthyle et méthyle/n-propyle.

**7.** Procédé de préparation des mélanges de colorants cités dans une ou plusieurs des revendications 1 à 6, caractérisé en ce que l'on mélange les colorants individuels ayant les formules générales I et II, préparés séparément et mis en forme séparément.

**8.** Procédé de préparation des mélanges de colorants cités dans une ou plusieurs des revendications 1 à 6, caractérisé en ce que l'on met en forme ensemble les colorants individuels ayant les formules générales I et II préparés séparément.

**9.** Utilisation d'un mélange de colorants selon l'une ou plusieurs des revendications 1 à 6 pour la teinture et l'impression de matières fibreuses hydrophobes et de leurs mélanges avec des matières fibreuses naturelles.